# EUROPEAN PATENT SPECIFICATION

(11) **EP 4 522 436 B1**
(45) Date of publication and mention of the grant of the patent: **19.11.2025**
(21) Application number: 23728638.0
(22) Date of filing: 15.05.2023
(51) Int. Cl.: B60K 1/04, B62D 23/00, B62D 25/00

(54) **A STRUCTURE FOR AN ELECTRIC VEHICLE**
STRUKTUR FÜR EIN ELEKTROFAHRZEUG
STRUCTURE POUR VÉHICULE ÉLECTRIQUE

(30) Priority: 13.05.2022 EP 22173246
(43) Date of publication of application: 19.03.2025
(73) Proprietor: Volk, Andreas, 8045 Graz (AT)
(72) Inventor: Volk, Andreas, 8045 Graz (AT)
(74) Representative: Kancelaria Eupatent.pl Sp. z o.o.
(86) International application number: PCT/EP2023/062981
(87) International publication number: WO 2023/218097

(56) References cited:
- EP-A1- 3 647 165
- WO-A1-2022/140476
- US-A1- 2019 030 605

## Description

### TECHNICAL FIELD

The present invention relates to a structure for an electric vehicle, in particular for an electric truck.

### BACKGROUND

Electric vehicles need a battery that provides energy for the electric propulsion system. The larger the battery, the more energy can be provided, resulting in higher usage of the vehicle as well as an increase of its mileage. This is especially important for long-haul trucks. Moreover, there are ongoing developments on scenarios that make use of charge available at the battery that has not been used for standard driving purposes, making maximizing battery capacity even more important.

A vehicle chassis is a construction that structurally supports the body of the vehicle and holds the key gear of it, such as engine, transmission, drive shaft, differential, suspension, cargo compartment and the driver cabin on top of it. Classical chassis is constructed as a metal frame. The gear is mounted to the frame by multiplicity of bolts.

Electric vehicles require a battery pack (or a set of batteries), with as large capacity as feasible, to be mounted in the vehicle. The size of the battery is proportional to its capacity; hence an electric truck needs to comprise a very heavy and very large battery. Such battery should be preferably mounted under the chassis to lower the center of gravity of the vehicle, to simplify servicing the battery, as well as to provide safety figures like in side impact crash event.

Existence of the metal frame contradicts the need to maximize the size of battery. With frame-based chassis for electric vehicles the space for batteries is limited and various solutions to accommodate larger batteries are proposed.

For example, a European patent application EP3964426A1 discloses a structure wherein batteries are placed between side rails of the truck frame. Still, the battery size is limited by the space available between the rails of the frame. The capacity is further reduced due to side impact protection in a crash event. The battery housing must support crash forces which decrease the volumetric capacity within the battery pack itself.

A Chinese utility model CN205930892U discloses a structure of an electric truck chassis where the battery is placed on the chassis that aims at reducing crash impact by having a layered structure with honeycomb layer. There is no frame, and the batteries can occupy entire width of the chassis. While this solution has no frame, it still requires that a chassis, on which batteries are placed, is needed.

A US patent application US2021155292A1 discloses a vehicle exoskeleton consisting of several pieces of formed metal, but the exoskeleton is mounted to a frame.

A European patent application EP3647165 discloses a unibody chassis for an electric vehicle (but not appropriate for truck or semitruck type vehicles), comprising a left side frame, a right side frame, at least one lower structural member, and a plurality of upper structural members connected with and extending across the left side frame and the right side frame. The lower structural member provides support for one or more rechargeable battery packs.

### SUMMARY

There is a need to provide a novel structure for an electric vehicle that will offer more space to accommodate the battery than the standard frame-based chassis.

The invention provides a structure for an electric vehicle, wherein the space between the wheels and sides of the vehicle is maximized for a maximum capacity of the battery. This is achieved by a design wherein, instead of classical frame-based chassis, a frameless exoskeleton is used, with the battery serving as a part of the exoskeleton structure. The structure strength is achieved by both the shape of the outer surface, preferably consisting of two exoskeleton pieces manufactured by deep-drawn, additive manufacturing or by injection molding processes, as well as the battery itself together with front and rear electric drive units (EDUs). The structural battery pack in the center of the chassis and the EDUs increase the rigidity and stiffness of the overall exoskeleton structure. Furthermore, the center of gravity is balanced within the vehicle. The overhang mass for ICE/DIESEL trucks is not existing anymore. The potential of oversteering and understeering is dramatically reduced by the centered structural battery layout. The tilting during cornering and vehicle movement by strong side winds is reduced further by a lowered center of gravity, as well in relation to conventional cabin over engine (COE) and long-haul truck designs. The battery does not require a separate letter frame for its protection, therefore the space within the exoskeleton can be efficiently used to accommodate battery cells. The battery pack and the electric drive units can be conveniently installed within the exoskeleton structure via inlets at the bottom of the electric drive unit sockets and the battery pack seat, therefore servicing of the vehicle is facilitated. The electric drive units are integrated with the electric motor housing, suspension and wheel, which can be disassembled from the exoskeleton as a single piece to be repaired, while another piece can be inserted instead to facilitate quick service. The exterior surface of the exoskeleton forms an outline of the chassis and the lower part of the body of the vehicle and is suitable for placing a driver's cabin on top of the exterior surface - such design is universal and allows to place various driver's cabins on the same type of the exoskeleton structure. The driver's cabin is positioned on the top side of the exoskeleton structure and does not limit the possibility to service the electric drive units nor battery pack, which are accessible from the bottom side.

The object of the invention is a combined chassis-body structure for an electric vehicle, the structure having a frameless form of an exoskeleton comprising: four electric drive unit sockets, each having a bottom inlet and accommodating therein an electric drive unit, wherein each electric drive unit comprises a support structure to which there is connected an electric motor housing and a suspension with a driving wheel, wherein the support structure of the electric drive unit is connected to a support structure of the corresponding socket; a battery pack seat having a bottom inlet and accommodating therein a battery pack; and an exterior surface that forms an outline of a chassis and a lower part of the body of the vehicle and is suitable for placing a driver's cabin on top of the exterior surface; wherein the seat for the battery pack, the electric drive unit sockets and the exterior surface are formed as two separate, individually integral elements of the exoskeleton that are coupled together along a longitudinal axis of the vehicle.

The elements of the exoskeleton can be formed at least in part by injection molding process and/or at least in part by deep drawing and/or at least in part by additive manufacturing.

The seat may comprise longitudinal bars for mounting the battery pack.

The invention also relates to an electric vehicle comprising the structure according to any of previous claims.

### BRIEF DESCRIPTION OF DRAWINGS

The invention is presented herein by means of example embodiments on a drawing, wherein:
Fig. 1A shows the structure in a top view;
Fig. 1B shows the structure in a bottom view;
Fig. 2A shows the structure in a top view with the battery pack and electric drive units mounted therein;
Fig. 2B shows the structure in a top view with the battery pack and electric drive units mounted therein;
Fig. 3 shows the structure assembled from two parts;
Fig. 4A shows a pair of EDUs and Fig. 4B shows a single EDU;
Fig. 5 shows a first example of a vehicle comprising the structure;
Fig. 6 shows a second example of a vehicle comprising the structure.

### DETAILED DESCRIPTION

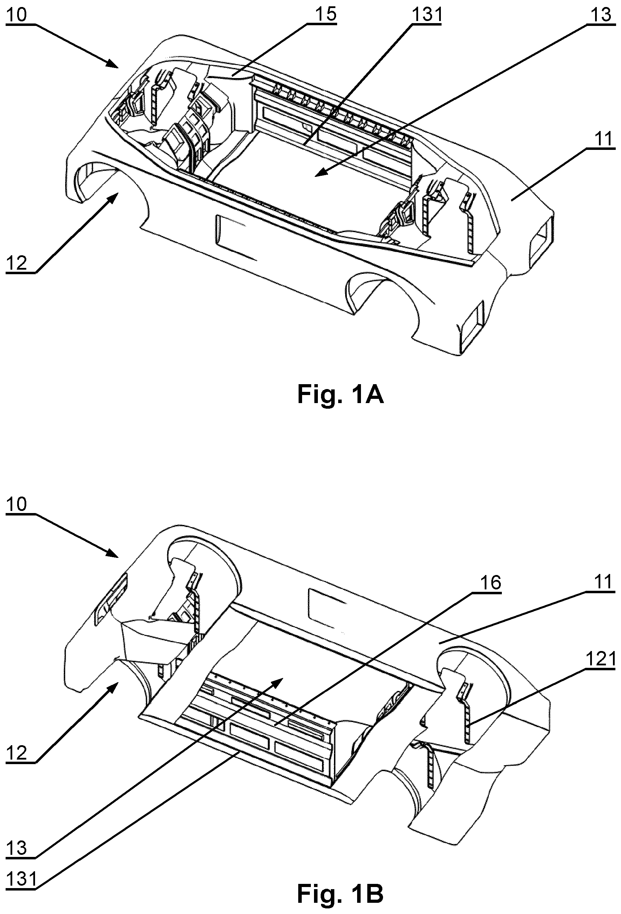

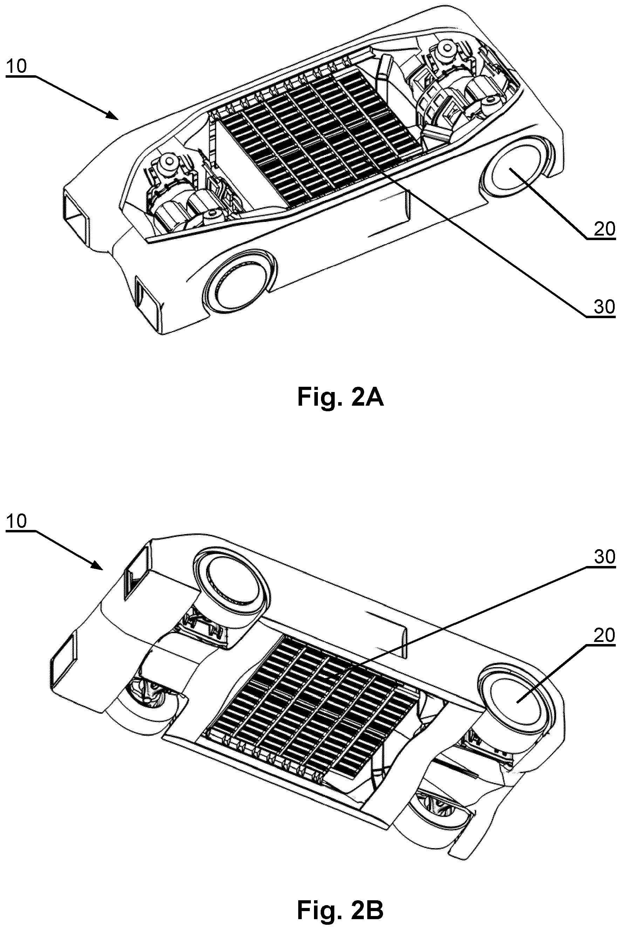

An example embodiment of the structure is shown alone in Figs. 1A and 1B, as well as with electric drive units and a battery pack in Figs. 2A and 2B. It has a frameless form of an exoskeleton 10, namely an external skeleton that functions as a support for electric drive units (EDUs) 20 and a battery pack 30, as well as a cover thereof. Therefore, the exoskeleton 10 provides the combined functionality of a conventional vehicle frame, chassis and body parts. The EDUs 20 are mounted in electric drive unit sockets 12, and the battery pack 30 is mounted in a battery pack seat 13. An exterior surface 11 forms an outline of the chassis of the vehicle, namely it covers the internal volume of the exoskeleton at the sides and at the top (i.e. it functions as a body of a standard vehicle).

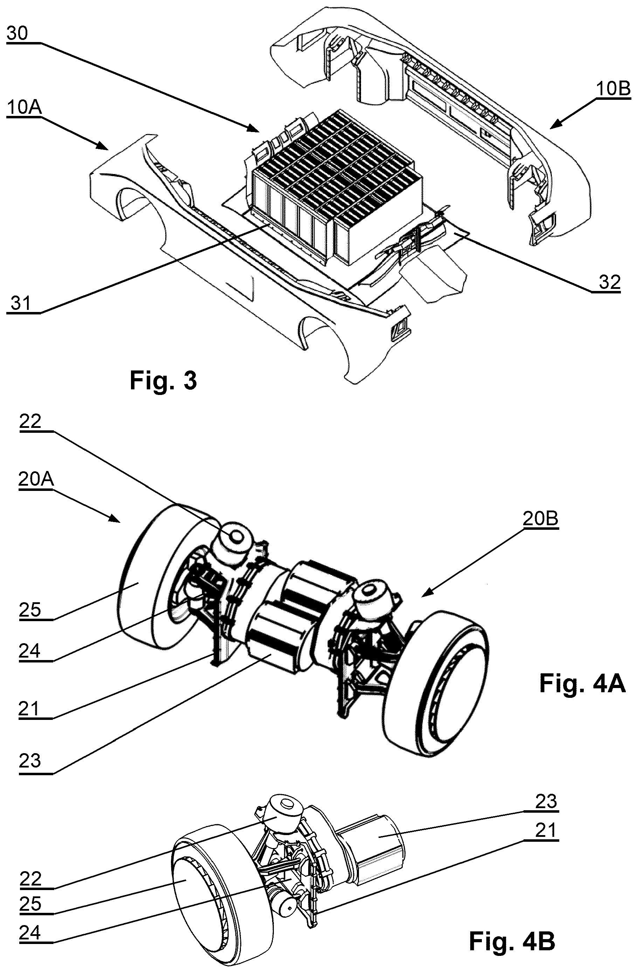

In particular, the exterior surface 11 is formed integrally with the battery pack seat 13 for accommodating the battery pack 30 and the electric drive unit sockets 12 for accommodating the EDUs 20. the exoskeleton is composed of two separate, individually integral elements 10A, 10B as shown in Fig. 3, that are coupled together along a longitudinal axis of the vehicle. Such separate elements 10A, 10B can be manufactured by suitable techniques such as deep drawing of a steel plate or injection molding of a plastic or 3D printing and next coupling them together for example by welding or form-filling fasteners. By making the whole exoskeleton 10 as two elements, the overall manufacturing complexity is limited, the vehicle assembly is made much quicker (for example, less bolts are needed to assemble the vehicle).

The exoskeleton may comprise various strengthening elements, such as bends 15 or ribs 16 that stiffen its outline. However, apart from the internal structural features of the exoskeleton, its structure is significantly strengthened by mounting therein the EDUs 20 and the battery pack 20.

In particular, a pair of EDUs 20A, 20B are mechanically fixed to each other as shown in Figs. 4A, 4B to form a single unit defining a vehicle axis. In that case, once the EDUs 20A, 20B are installed in their corresponding electric drive unit sockets 12 within the exoskeleton, the exoskeleton is additional strengthened across the width of the vehicle. To provide increase stable connection, each EDU 20 has a pair of support structures 21 to be connected with corresponding support structures 121 at the electric drive unit sockets 12, wherein the support structures 21, 121 are joined together at a plurality of points, for example by mounting bolts. Each electric drive unit 20 comprises a support structure 21 to which there is connected an electric motor housing 23 (which contains the electric motor and gearbox components if present) and a suspension 24 (including shock absorbers 22) with a driving wheel 25. Therefore, as both EDUs 20A, 20B at the same axis are connected with the exoskeleton 10 at a plurality of points and may be further connected together e.g. at the electric drives, the strength of the exoskeleton with the EDUs at the axis region can be made of a level comparable with a conventional frame-based chassis construction. The EDUs are mounted at the electric drive unit sockets 12 via its bottom inlet, therefore they can be easily removed, as a coupled connection of the electric motor housing 23, suspension 24 and the driving wheel 25, from the bottom of the exoskeleton 10 and exchanged if needed for service repairs.

The battery pack 30 is mounted to its battery pack seat 13 via at least two longitudinal bars 31 connected, for example by screws or by welding by form-filling fasteners, to corresponding longitudinal bars 131 at the battery pack seat 13. The battery pack 30 can be mounted by a solid plate 32 by a u-frame 31 interface by form-filling fasteners between 131, 16 and top bar of the exoskeleton. The batteries within the battery pack 30 can be stacked in a tight adjacent arrangement with respect to each other, therefore they provide a solid structure of the battery pack 30. Multilayers consist of cells and sheet metals packed of each other in height and length creating waffle structure. Thereby, the battery pack 30 functions as a solid element in the middle portion of the exoskeleton, which makes the exoskeleton strong along its length and width in the middle portion between the axles. The battery 30 is accommodated within the battery pack seat 13 via a bottom inlet, such that it can be easily removed, exchanged and installed within the battery pack seat 13 from the bottom of the vehicle if necessary.

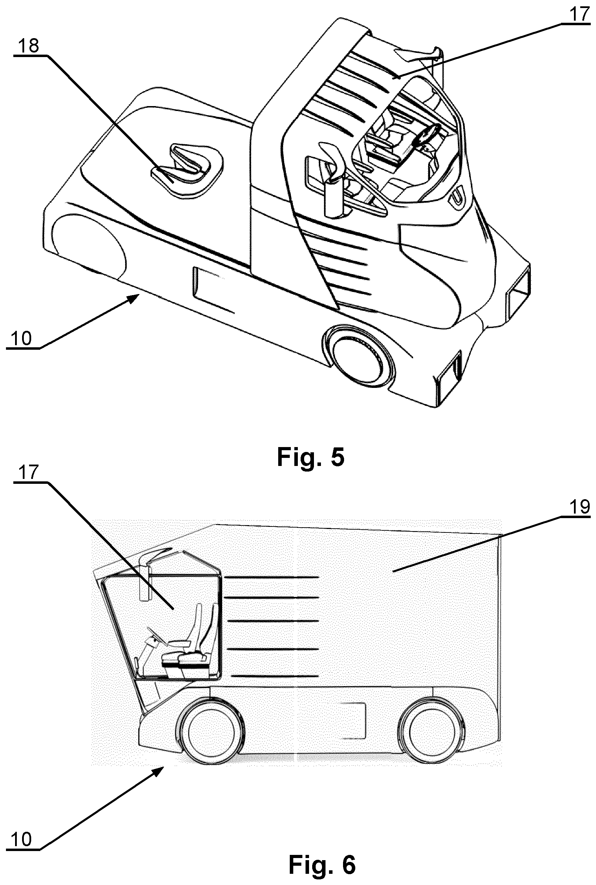

Thereby, a solid construction is provided over which other elements of the vehicle can be mounted. For example, if the vehicle is a semitrailer truck, elements such as a driver's cabin 17 or a saddle 18 can be mounted thereon, as shown in Fig. 5. As all the drivetrain components (the EDUs) are located in the electric drive unit sockets 12 at the bottom of the exoskeleton 10, the exoskeleton 10 may have a flat top surface, which allows for freedom of design of the driver's cabin 17.

Fig. 6 shows another example of a vehicle comprising the structure described above - namely, a box truck, having a driver's cabin 17 and a load compartment 19 mounted on the exoskeleton 10.

Although the invention is presented in the drawings and the description and in relation to its preferred embodiments, these embodiments do not restrict nor limit the presented invention. It is therefore evident that changes can be made within the scope of the invention, defined only by the appended claims. The presented embodiments are therefore to be considered in all aspects as illustrative and not restrictive. According to the abovementioned, the scope of the invention is not restricted to the presented embodiments but it is defined and restricted only by the scope of the appended claims.

## Claims

1. A combined chassis-body structure for an electric vehicle, the structure having a frameless form of an exoskeleton (10) comprising:
four electric drive unit sockets (12), each having a bottom inlet and accommodating therein an electric drive unit (20);
a battery pack seat (13) having a bottom inlet and accommodating therein a battery pack (30); and
an exterior surface (11) that forms an outline of a chassis and a lower part of the body of the vehicle
**characterized in that**:
each electric drive unit (20) comprises a support structure (21) to which there is connected an electric motor housing (23) and a suspension (24) with a driving wheel (25), wherein the support structure (21) of the electric drive unit (20) is connected to a support structure (121) of the corresponding socket (12);
the exterior surface (11) is suitable for placing a driver's cabin (17) on top of the exterior surface (11); and
the seat (13) for the battery pack (30), the electric drive unit sockets (12) and the exterior surface (11) are formed as two separate, individually integral elements (10A, 10B) of the exoskeleton (10) that are coupled together along a longitudinal axis of the vehicle.

2. The structure according to claim 1, wherein the elements (10A, 10B) of the exoskeleton (10) are formed at least in part by injection molding process.

3. The structure according to any of previous claims, wherein the elements (10A, 10B) of the exoskeleton (10) is formed at least in part by deep drawing.

4. The structure according to any of previous claims, wherein the elements (10A, 10B) of the exoskeleton (10) is formed at least in part by additive manufacturing.

5. The structure according to any of previous claims, wherein the seat (13) comprises longitudinal bars (131) for mounting the battery pack (30).

6. An electric vehicle comprising the structure according to any of previous claims.

## Patentansprüche

1. Kombinierte Fahrgestell-Karosserie-Struktur für ein Elektrofahrzeug, wobei die Struktur eine rahmenlose Form eines Exoskeletts (10) aufweist, umfassend:
vier Vertiefungen (12) für elektrische Antriebseinheiten, die jeweils einen Bodeneinlass aufweisen und darin eine elektrische Antriebseinheit (20) unterbringen;
eine Batteriepackaufnahme (13), die einen Bodeneinlass aufweist und darin ein Batteriepack (30) unterbringt; und
eine Außenoberfläche (11), die einen Umriss eines Fahrgestells und eines unteren Teils der Karosserie des Fahrzeugs ausbildet;
**dadurch gekennzeichnet, dass**:
jede elektrische Antriebseinheit (20) eine Tragstruktur (21), mit der ein Elektromotorgehäuse (23) verbunden ist, und eine Aufhängung (24) mit einem Antriebsrad (25) umfasst, wobei die Tragstruktur (21) der elektrischen Antriebseinheit (20) mit einer Tragstruktur (121) der entsprechenden Vertiefung (12) verbunden ist;
die Außenoberfläche (11) zum Platzieren einer Fahrerkabine (17) oben auf der Außenoberfläche (11) geeignet ist; und
die Aufnahme (13) für das Batteriepack (30), die Vertiefungen (12) für elektrische Antriebseinheiten und die Außenoberfläche (11) als zwei separate, einzeln einstückige Elemente (10A, 10B) des Exoskeletts (10) ausgebildet sind, die entlang einer Längsachse des Fahrzeugs miteinander gekoppelt sind.

2. Struktur nach Anspruch 1, wobei die Elemente (10A, 10B) des Exoskeletts (10) zumindest teilweise durch Spritzgussverfahren ausgebildet sind.

3. Struktur nach einem der vorhergehenden Ansprüche, wobei die Elemente (10A, 10B) des Exoskeletts (10) zumindest teilweise durch Tiefziehen ausgebildet sind.

4. Struktur nach einem der vorhergehenden Ansprüche, wobei die Elemente (10A, 10B) des Exoskeletts (10) zumindest teilweise durch additive Fertigung ausgebildet sind.

5. Struktur nach einem der vorhergehenden Ansprüche, wobei die Aufnahme (13) Längsstangen (131) zum Montieren des Batteriepacks (30) umfasst.

6. Elektrofahrzeug, umfassend die Struktur nach einem der vorhergehenden Ansprüche.

## Revendications

1. Structure combinée châssis-carrosserie pour véhicule électrique, la structure présentant une forme sans cadre d'un exosquelette (10) comprenant :
quatre emplacements (12) d'unité motrice électrique, chacun présentant une entrée inférieure et logeant une unité motrice électrique (20) ;
un siège (13) de bloc-batterie présentant une entrée inférieure et logeant un bloc-batterie (30) ; et
une surface extérieure (11) qui forme un contour d'un châssis et une partie inférieure de la carrosserie du véhicule ;
**caractérisée en ce que** :
chaque unité motrice électrique (20) comprend une structure de support (21) à laquelle sont reliés un boîtier de moteur électrique (23) et une suspension (24) avec une roue motrice (25), dans laquelle la structure de support (21) de l'unité motrice électrique (20) est reliée à une structure de support (121) de l'emplacement (12) correspondant ;
la surface extérieure (11) est appropriée pour placer une cabine de conduite (17) sur le dessus de la surface extérieure (11) ; et
le siège (13) pour le bloc-batterie (30), les emplacements (12) d'unité motrice électrique et la surface extérieure (11) sont formés comme deux éléments séparés (10A, 10B) individuellement intégrés de l'exosquelette (10) qui sont couplés ensemble le long d'un axe longitudinal du véhicule.

2. Structure selon la revendication 1, dans laquelle les éléments (10A, 10B) de l'exosquelette (10) sont formés au moins en partie par un procédé de moulage par injection.

3. Structure selon l'une quelconque des revendications précédentes, dans laquelle les éléments (10A, 10B) de l'exosquelette (10) sont formés au moins en partie par emboutissage profond.

4. Structure selon l'une quelconque des revendications précédentes, dans laquelle les éléments (10A, 10B) de l'exosquelette (10) sont formés au moins en partie par fabrication additive.

5. Structure selon l'une quelconque des revendications précédentes, dans laquelle le siège (13) comprend des barres longitudinales (131) pour monter le bloc-batterie (30).

6. Véhicule électrique comprenant la structure selon l'une quelconque des revendications précédentes.
